# EUROPÄISCHE PATENTSCHRIFT

(11) **EP 4 039 633 B1**
(45) Veröffentlichungstag und Bekanntmachung des Hinweises auf die Patenterteilung: **04.09.2024**
(21) Anmeldenummer: 21206339.0
(22) Anmeldetag: 04.11.2021
(51) Int. Cl.: B66C 23/26

(54) **MOBILKRAN-FAHRZEUGRAHMEN MIT LÖSBAR MITEINANDER VERBINDBAREN RAHMENTEILEN**
MOBILE CRANE VEHICLE FRAME WITH DETACHABLY CONNECTABLE FRAME PARTS
CHÂSSIS DE VÉHICULE À GRUE MOBILE POURVU DE PIÈCES AMOVIBLES DE CHÂSSIS

(30) Priorität: 08.02.2021 DE 102021102844
(43) Veröffentlichungstag der Anmeldung: 10.08.2022
(73) Patentinhaber: Manitowoc Crane Group France SAS, 69570 Dardilly Cedex (FR)
(72) Erfinder: STÜHRWOLDT, Dieter, 26384 Wilhelmshaven (DE)
(74) Vertreter: SSM Sandmair

(56) Entgegenhaltungen:
- JP-A- 2019 218 168

## Beschreibung

Die vorliegende Erfindung betrifft einen Fahrzeugrahmen für einen Mobilkran mit zumindest zwei Rahmenteilen, welche über eine gemeinsame Schnittstelle lösbar miteinander verbunden werden können. Die Erfindung betrifft ferner einen Mobilkran mit einem solchen Fahrzeugrahmen.

Mobilkrane sind speziell dazu entworfen, im regulären Straßenverkehr zu ihrem Einsatzort verbracht zu werden. Unter anderem sind hierfür allerdings strenge gesetzliche Vorgaben hinsichtlich einer maximal möglichen Achslast einzuhalten. Eine gängige technische Maßnahme zur Verringerung des Fahrzeuggewichts während des Straßentransports ist der vom eigentlichen Kranfahrzeug getrennte Transport einzelner Krankomponenten, die erst am Einsatzort gerüstet werden. Die EP 1 190 979 A2 schlägt in diesem Zusammenhang sogar vor, einen am Fahrzeugheck verbolzten Abstützkasten für den Straßentransport zu demontieren und durch ein Zusatzfahrwerk zu ersetzen, welches in die gleichen Aufnahmen am Fahrzeugrahmen eingreift. Im Kranbetrieb muss die Verbolzung zwischen dem Abstützkasten und dem Fahrzeugrahmen hohe Kräfte und Momente aufnehmen und hierfür entsprechend ausgelegt und dimensioniert sein. JP 2019 218168 A offenbart einen Fahrzeugrahmen gemäß dem Oberbegriff des Anspruchs 1.

Es ist die Aufgabe der vorliegenden Erfindung, diesen Stand der Technik weiterzubilden und einen Mobilkran-Fahrzeugrahmen mit einer Schnittstelle zwischen voneinander demontierbaren Rahmenteilen bereitzustellen, welche eine gegenüber bekannten Lösungen verbesserte Belastbarkeit aufweist.

Diese Aufgabe wird durch einen Fahrzeugrahmen gemäß dem Patentanspruch 1 und durch einen Mobilkran gemäß dem Patentanspruch 10 gelöst. Die Unteransprüche definieren dabei bevorzugte Ausführungsformen der vorliegenden Erfindung.

Der erfindungsgemäße Mobilkran-Fahrzeugrahmen weist ein erstes Rahmenteil und ein zweites Rahmenteil auf, welche über eine gemeinsame Schnittstelle lösbar miteinander verbindbar sind, wobei die Schnittstelle mehrere Verbolzungsstellen mit den jeweiligen Rahmenteilen zugeordneten Verbolzungselementen umfasst, und ferner zumindest eine Eingriffsstrecke mit den jeweiligen Rahmenteilen zugeordneten Eingriffselementen umfasst, die bei miteinander fluchtenden Verbolzungselementen über deren Erstreckung hinweg in einem wechselseitig formschlüssigen Eingriff stehen.

Mit anderen Worten umfasst der Fahrzeugrahmen ein oder mehrere Schnittstellen, über welche jeweils zumindest zwei Rahmenteile lösbar miteinander verbunden werden können. So kann der Fahrzeugrahmen an ein oder mehreren solcher Schnittstellen in entsprechend viele Rahmenteile zerlegt werden, um diese beispielsweise einzeln per Straßentransport zum Einsatzort zu verbringen. Ein Rahmenteil kann beispielsweise das Fahrwerk des Mobilkrans aufweisen bzw. dieses aufnehmen. Weitere Rahmenteile können einen vorderen oder einen hinteren Abstützkasten umfassen bzw. einen solchen ausbilden, welcher die zu beiden Seiten des Fahrzeugrahmens angeordneten Abstützträger samt Abstützglieder und Abstützteller verschieblich lagert.

Erfindungsgemäß werden die jeweiligen Rahmenteile über mehrere Bolzenverbindungen der Schnittstelle miteinander verbunden, wobei die jeweiligen Rahmenteile zusätzlich über ein oder mehrere längliche Abschnitte gegenseitig ineinander eingreifen. Durch diesen zusätzlichen formschlüssigen Eingriff werden die Bolzenverbindungen im Kranbetrieb in entscheidendem Maße entlastet, so dass Kräfte und Momente über die Schnittstelle hinweg wesentlich effizienter übertragen werden können.

Ein wechselseitiger Eingriff zwischen den einzelnen Eingriffselementen ist dabei so zu verstehen, dass sich die miteinander in Eingriff stehenden Eingriffselemente über eine gewisse Wegstrecke hinweg gegenseitig abstützen. Beispielsweise können die einzelnen Eingriffselemente über ihre Erstreckung hinweg eine Vielzahl von Stützflächen aufweisen, über welche sich das jeweils andere Eingriffselement bei entsprechender Belastung abstützen kann. Anders ausgedrückt kann die Kraftübertragung zwischen den in Eingriff stehenden Eingriffselementen im Wesentlichen gleichmäßig verteilt über deren Erstreckung hinweg erfolgen. Erfindungsgemäß können die einzelnen korrespondierenden Eingriffselemente ein über ihre Erstreckung hinweg gleichförmiges Profil mit regelmäßig wiederkehrenden Vorsprüngen bzw. Einschnitten aufweisen, über welche ein Eingriff am jeweils anderen Eingriffselement stattfindet. Insbesondere können die zueinander korrespondierenden Eingriffselemente ein ähnliches oder identisches Profil aufweisen.

Gemäß einer weiteren Ausführungsform der vorliegenden Erfindung sind die Eingriffselemente zumindest einer, insbesondere aller Eingriffsstrecken der Schnittstelle zumindest abschnittsweise als ebene Eingriffsbleche ausgestaltet. Grundsätzlich sind über ihre Erstreckung hinweg beliebig geformte bzw. gebogene Eingriffsbleche vorstellbar. Um beispielsweise ein Torsionsmoment über im Eingriff stehende Eingriffsbleche abstützen, könnten diese beispielsweise über ihre Erstreckung hinweg einen Radius um eine neutrale Faser der Torsionsbelastung des Fahrzeugrahmens ausbilden. Über ihre Erstreckung hinweg gerade Eingriffsbleche sind demgegenüber sehr gut geeignet, parallel zu ihrer Erstreckung gerichtete Kräfte aufzunehmen.

Gemäß einer weiteren Ausführungsform der vorliegenden Erfindung werden die Verbolzungselemente zumindest einer, insbesondere aller Verbolzungsstellen der Schnittstelle in Flucht gebracht, indem die betreffenden Rahmenteile in einer Bewegung zusammengeführt werden, insbesondere mittels einer einzigen translatorischen Bewegung. Hierbei ist es zusätzlich möglich, die Eingriffselemente zumindest einer, insbesondere aller Eingriffsstrecken in Eingriff zu bringen, wobei es insbesondere möglich ist, an ein oder mehreren Eingriffsstrecke einen Eingriff auszubilden, welcher Kräfte in einer Richtung übertragen kann, die senkrecht zu der Richtung verläuft, in welcher die Verbolzungselemente in Flucht gebracht werden.

Gemäß einer weiteren Ausführungsform sind jeweils zumindest zwei Verbolzungsstellen in voneinander beabstandeten Ebenen der Schnittstelle angeordnet, wobei sich quer zu den Ebenen zumindest zwei voneinander beabstandete Eingriffsstrecken erstrecken. Die Verbolzungsstellen der Schnittstelle können insbesondere auf zwei Ebenen verteilt sein, wobei sich zu diesen Ebenen zwei Eingriffsstrecken quer erstrecken. Insbesondere können die Ebenen und die Eingriffsstrecken einen zentralen Bereich der Schnittstelle umlaufen, durch welchen beispielsweise neutrale Fasern für auftretende Biege- oder Torsionsbeanspruchungen der Rahmenschnittstelle verlaufen. In einer speziellen Ausführungsform können die Ebenen mit den Eingriffsstrecken einen rechteckigen Bereich der Schnittstelle eingrenzen.

In einer weiteren Ausführungsform sind ein oder mehrere Verbolzungselemente an einer Lasche ausgebildet, welche als einfache oder als Gabellasche an einem entsprechenden Rahmenteil ausgestaltet sein kann. Insbesondere können dabei zwei oder mehrere Verbolzungselemente an einer gemeinsamen Lasche ausgebildet sein. Die Laschen können ferner dazu dienen, die Verbolzungselemente in der Ebene zu positionieren, in welcher die Eingriffselemente im Wesentlichen ineinandergreifen. Mit anderen Worten finden die Krafteinleitungen bzw. -ausleitungen über die einzelnen Verbolzungselemente und Eingriffselemente im Wesentlichen innerhalb einer Ebene statt.

Ferner ist es möglich, dass sich die Eingriffselemente zumindest einer Eingriffsstrecke, bezogen auf die Raumlage eines einsatzfähigen Krans, in horizontaler oder in vertikaler Richtung erstrecken.

Ferner können die Eingriffselemente zumindest einer Eingriffsstrecke zur Bildung eines formschlüssigen Eingriffs mehrere sich in Richtung des jeweils anderen Eingriffselements der Eingriffsstrecke verjüngende Fortsätze aufweisen. Auf diese Weise kann eine solche Eingriffsstrecke sogleich eine Art Positionierhilfe beim Zusammenführen der Rahmenteile und letztendlichen Verbolzung bilden, da die Eingriffselemente die Rahmenteile während des Zusammenführens sozusagen selbsttätig zentrieren.

Ferner können die Eingriffselemente zumindest einer Eingriffsstrecke mehrere Fortsätze aufweisen, welche sich, bezogen auf die Raumlage eines einsatzfähigen Krans, in horizontaler oder vertikaler Richtung erstrecken.

Obwohl es grundsätzlich möglich ist, die Eingriffselemente der jeweiligen Eingriffsstrecken positionsfest an den jeweiligen Rahmenteilen zu befestigen, beispielsweise durch bekannte formschlüssige, reibschlüssige oder stoffschlüssige Verbindungen wie etwa Niet-, Schraub- oder Schweißverbindungen, so kann zumindest ein Eingriffselement zumindest einer Eingriffsstrecke positionell verstellbar am jeweiligen Rahmenteil angeordnet sein, insbesondere mittels eines Justiermechanismus und/oder in Richtung seiner Erstreckung verstellbar. So kann ein entsprechendes Eingriffselement mittels des Justiermechanismus und/oder mittels einer reibschlüssigen oder formschlüssigen Verbindung am Rahmenteil in Position gehalten werden, wobei insbesondere ein oder mehrere Schraubverbindungen dazu dienen können, das entsprechende Eingriffselement am Rahmen positionell variabel zu fixieren.

Ein weiterer Erfindungsaspekt betrifft einen Mobilkran mit einem Fahrzeugrahmen gemäß einer der voranstehend beschriebenen Ausführungsformen.

Die vorliegende Erfindung wird im Folgenden anhand einer bevorzugten Ausführungsform und unter Bezugnahme auf die beiliegenden Figuren näher beschrieben. Die Erfindung kann sämtliche hierin beschriebenen Merkmale einzeln sowie in jedweder sinnvollen Kombination umfassen.

Es zeigen:
- Figur 1: einen erfindungsgemäßen Fahrzeugrahmen mit voneinander getrennten Rahmenteilen;
- Figur 2: den Fahrzeugrahmen aus Figur 1 mit zueinander positionierten Rahmenteilen;
- Figur 3: den Fahrzeugrahmen aus Figur 1 im fertig miteinander verbolzten Zustand der Rahmenteile.

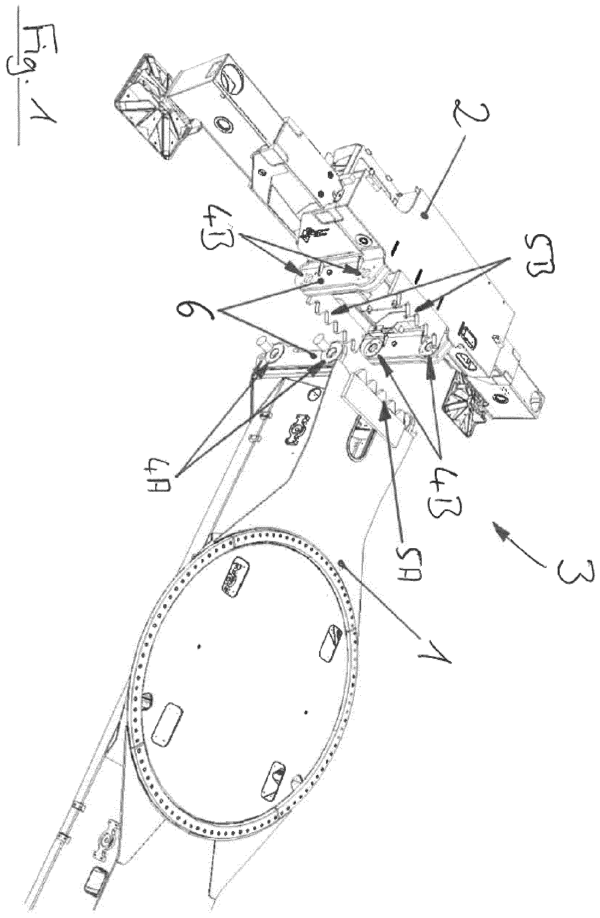

Bei der in der Figur 1 gezeigten Ausführungsform bildet der zentrale Hauptrahmen des Mobilkrans, welcher letztendlich auch die Fahrwerkskomponenten und die Drehtischlagerung aufnimmt, ein erstes Rahmenteil 1. Das zweite Rahmenteil 2 wird durch den heckseitigen Abstützkasten gebildet, welcher die zu beiden Seiten des Mobilkrans ausbringbaren Abstützträger verschieblich lagert. Zum Rüsten des Abstützkastens 2 am Hauptrahmen 1 wird dieser in Fahrzeuglängsrichtung an den Hauptrahmen 1 herangeführt, so dass sie sich im Bereich der gemeinsamen Schnittstelle 3 kontaktieren. Dieser Schritt kann durch den Kran im Rahmen des sogenannten "Selbstrüstens" autonom durchgeführt werden, indem der auf einem Transportfahrzeug abgelegte Abstützkasten 2 vom Kran selbst aufgenommen und am Fahrzeugheck im Bereich der Schnittstelle 3 positioniert wird.

Die Schnittstelle 3 umfasst auf Seiten des Hauptrahmens 1 zwei einfache, sich zu beiden Seiten des Hauptrahmens 1 in vertikaler Richtung erstreckende Laschen mit jeweils zwei Bolzenaugen 4A. Zwischen diesen einfachen Laschen erstrecken sich senkrecht hierzu zwei Eingriffsbleche 5A mit einer Vielzahl identisch ausgeformter, dreieckiger Fortsätze. Auf Seiten des Abstützkastens 2 finden sich die komplementären Elemente für eine formschlüssige Verbindung mit dem Hauptrahmen 1, nämlich ebenfalls zwei sich horizontal erstreckende Eingriffsbleche 5B, an deren Endbereichen sich zwei Gabellaschen mit jeweils zwei Bolzenaugen 4B erstrecken. Es ist zu erkennen, dass die Laschen und die Eingriffsbleche 5A, 5B einen möglichst großen rechteckigen Bereich in der Ebene der Schnittstelle 3 eingrenzen, um zwischen den Rahmenteilen 1 und 2 Kräfte und Momente optimal übertragen zu können.

Beim Annähern des Abstützkastens 2 an den Hauptrahmen 1 fahren die einfachen Laschen des Hauptrahmens 1 in die Gabellaschen des Abstützkastens 2 ein, während gleichzeitig die Eingriffsblende 5A und 5B der Rahmenteile 1 und 2 in Eingriff gebracht werden. So werden letztendlich über die Erstreckung beider Eingriffsstrecken hinweg eine Vielzahl von gleichmäßig verteilten Anlageflächen geschaffen, über welche sich nicht nur der Hauptrahmen 1 am Abstützkasten 2, sondern auch der Abstützkasten 2 am Hauptrahmen 1 abstützen kann.

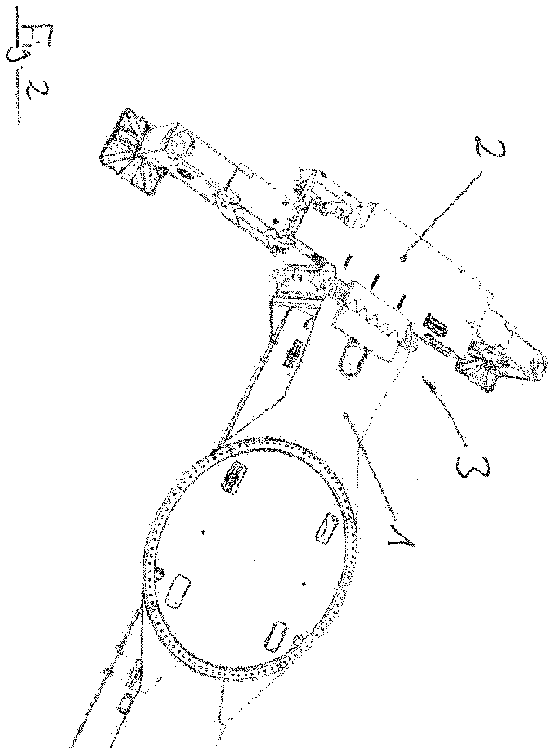

Die Figur 2 zeigt die Rahmenteile 1 und 2 in ihrer Endlage, in welcher sie sich an der Schnittstelle 3 kontaktieren und an den Verbolzungsstellen miteinander verbolzt werden können. Die in der Figur 2 nicht näher bezeichneten Bolzen können hierbei hydraulisch in die entsprechenden Aufnahmen 4A und 4B eingeschoben und auch wieder ausgezogen werden.

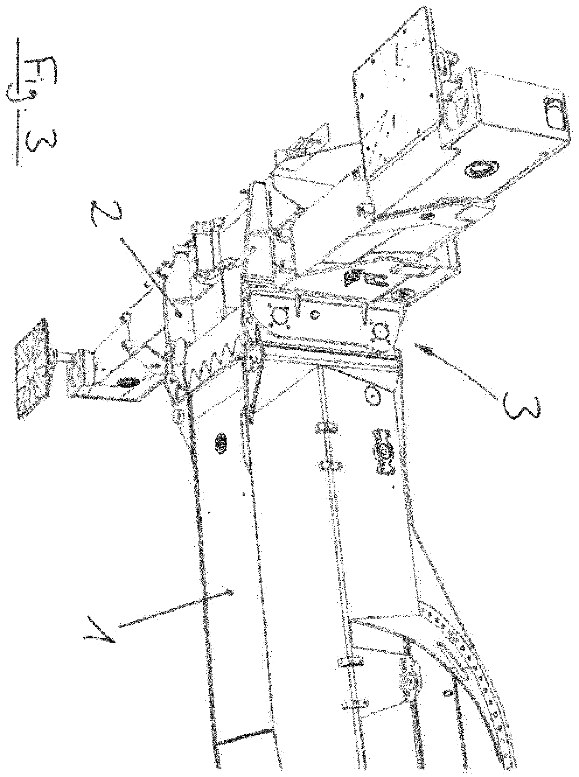

Die Figur 3 zeigt den fertig am Hauptrahmen 1 verbolzten Abstützkasten 2.

## Patentansprüche

1. Fahrzeugrahmen für einen Mobilkran, mit einem ersten und einem zweiten Rahmenteil (1, 2), welche über eine gemeinsame Schnittstelle (3) lösbar miteinander verbindbar sind, wobei die Schnittstelle (3) mehrere Verbolzungsstellen mit den jeweiligen Rahmenteilen (1, 2) zugeordneten Verbolzungselementen (4A, 4B) umfasst, wobei die Schnittstelle (3) ferner zumindest eine Eingriffsstrecke mit den jeweiligen Rahmenteilen (1, 2) zugeordneten Eingriffselementen (5A, 5B) umfasst, **dadurch gekennzeichnet, dass** die Eingriffselemente zumindest abschnittsweise als Eingriffsbleche mit über ihre Erstreckung hinweg regelmäßig wiederkehrenden Vorsprüngen bzw. Einschnitten ausgestaltet sind und bei miteinander fluchtenden Verbolzungselementen (4A, 4B) über ihre Erstreckung hinweg in einem wechselseitig formschlüssigen Eingriff stehen.

2. Fahrzeugrahmen gemäß Anspruch 1, wobei die Verbolzungselemente (4a, 4B) zumindest einer, insbesondere aller Verbolzungsstellen ausgestaltet sind, im Wesentlichen in einer ersten Richtung in Flucht gebracht zu werden, und wobei die Eingriffselemente (5A, 5B) zumindest einer, insbesondere aller Eingriffsstrecken ausgestaltet sind, einen in einer zur ersten Richtung senkrechten Richtung kraftübertragenden Eingriff auszubilden.

3. Fahrzeugrahmen gemäß einem der Ansprüche 1 und 2, mit jeweils zumindest zwei in voneinander beabstandeten Ebenen angeordneten Verbolzungsstellen und zwei sich hierzu quer erstreckenden und voneinander beabstandeten Eingriffsstrecken, insbesondere wobei die Ebenen und die Eingriffsstrecken einen zentralen Bereich der Schnittstelle (3) umlaufen, im Speziellen in der Form eines Rechtecks umlaufen.

4. Fahrzeugrahmen gemäß einem der Ansprüche 1 bis 3, wobei jeweils zumindest zwei Verbolzungelemente (4A, 4B) an einer gemeinsamen Lasche (6) angeordnet sind, insbesondere wobei sich die Verbolzungselemente (4A, 4B) und die Eingriffselemente (5A, 5B) der jeweiligen Rahmenteile (1, 2) im Wesentlichen innerhalb einer Ebene kontaktieren bzw. ineinander eingreifen.

5. Fahrzeugrahmen gemäß einem der Ansprüche 1 bis 4, wobei sich die Eingriffselemente (5A, 5B) zumindest einer Eingriffsstrecke in horizontaler oder vertikaler Richtung erstrecken.

6. Fahrzeugrahmen gemäß einem der Ansprüche 1 bis 5, wobei die Eingriffselemente (5A, 5B) zumindest einer Eingriffsstrecke mehrere sich in Richtung des jeweils anderen Eingriffselements (5A, 5B) der Eingriffsstrecke verjüngende Fortsätze aufweisen.

7. Fahrzeugrahmen gemäß einem der Ansprüche 1 bis 6, wobei die Eingriffselemente (5A, 5B) zumindest einer Eingriffsstrecke mehrere sich in horizontaler oder vertikaler Richtung erstreckende Fortsätze aufweisen.

8. Fahrzeugrahmen gemäß Anspruch einem der Ansprüche 1 bis 7, wobei zumindest ein Eingriffselement (5A, 5B) zumindest einer Eingriffsstrecke positionell verstellbar am jeweiligen Rahmenteil (1, 2) angeordnet ist, insbesondere mittels eines Justiermechanismus und/oder in Richtung seiner Erstreckung verstellbar.

9. Mobilkran mit einem Fahrzeugrahmen gemäß einem der Ansprüche 1 bis 8.

## Claims

1. A vehicle frame for a mobile crane, comprising a first frame part and a second frame part (1, 2) which can be detachably connected to each other via a common interface (3), wherein the interface (3) comprises multiple points at which it is bolted to bolting elements (4A, 4B) assigned to the respective frame parts (1, 2), wherein the interface (3) also comprises at least one engaging profile along which it engages with engaging elements (5A, 5B) assigned to the respective frame parts (1, 2), **characterized in that** the engaging elements are, at least in portions, formed as flat engaging plates having repeatedly re-appearing protrusions and/or incisions across their extent, and are, when the bolting elements (4A, 4B) are aligned with each other, in a mutually positive-fit engagement across their extent.

2. The vehicle frame in accordance with claim 1, wherein the bolting elements (4A, 4B) of at least one and in particular all of the points at which the interface is bolted are designed to be aligned substantially in a first direction, and wherein the engaging elements (5A, 5B) of at least one and in particular all of the engaging profiles are designed to form an engagement which transmits forces in a direction perpendicular to the first direction.

3. The vehicle frame in accordance with one of claims 1 to 2, respectively comprising at least two points at which the interface is bolted, which are arranged in planes which are spaced apart from each other, and two mutually spaced engaging profiles extending transversely thereto, wherein the planes and the engaging profiles in particular encircle a central region of the interface (3), specifically in the shape of a rectangle.

4. The vehicle frame in accordance with any one of claims 1 to 4, wherein at least two bolting elements (4A, 4B) are respectively arranged on a common bracket (6), wherein the bolting elements (4A, 4B) and the engaging elements (5A, 5B) of the respective frame parts (1, 2) in particular contact each other and/or engage with each other substantially within one plane.

5. The vehicle frame in accordance with any one of claims 1 to 4, wherein the engaging elements (5A, 5B) of at least one engaging profile extend in the horizontal or vertical direction.

6. The vehicle frame in accordance with any one of claims 1 to 5, wherein the engaging elements (5A, 5B) of at least one engaging profile comprise multiple projections which taper towards the respective other engaging element (5A, 5B) of the engaging profile in each case.

7. The vehicle frame in accordance with any one of claims 1 to 6, wherein the engaging elements (5A, 5B) of at least one engaging profile comprise multiple projections which extend in the horizontal or vertical direction.

8. The vehicle frame in accordance with any one of claims 1 to 7, wherein at least one engaging element (5A, 5B) of at least one engaging profile is arranged on the respective frame part (1, 2) such that it is positionally adjustable, in particular by means of an adjusting mechanism and/or in the direction of its extent.

9. A mobile crane comprising a vehicle frame in accordance with any one of claims 1 to 8.

## Revendications

1. Châssis de véhicule pour grue mobile, comportant une première et une deuxième partie de châssis (1, 2) susceptibles d'être reliées l'une à l'autre de manière amovible par l'intermédiaire d'une interface (3) commune, ladite interface (3) comportant plusieurs points de boulonnage avec des éléments de boulonnage (4A, 4B) associés aux parties de châssis (1, 2) respectives ; dans lequel l'interface (3) comprend en outre au moins une voie de mise en prise avec des éléments de mise en prise (5A, 5B) associés aux parties de châssis (1, 2) respectives ; **caractérisé en ce que** les éléments de mise en prise sont conçus, au moins partiellement, sous la forme de plaques de mise en prise dotées de saillies ou d'incisions répétées régulièrement sur leur étendue et sont mutuellement en prise par complémentarité de forme, sur leur étendue, lorsque les éléments de boulonnage (4A, 4B) sont en alignement.

2. Châssis de véhicule selon la revendication 1, dans lequel les éléments de boulonnage (4a, 4B) d'au moins un et notamment de tous les points de boulonnage sont conçus pour être alignés essentiellement selon une première direction, et dans lequel les éléments de mise en prise (5A, 5B) d'au moins une et notamment de toutes les voies de mise en prise sont conçus pour former une mise en prise de transmission de force dans une direction perpendiculaire à la première direction.

3. Châssis de véhicule selon l'une des revendications 1 et 2, comportant au moins deux points de boulonnage disposés dans des plans espacés l'un de l'autre et deux voies de mise en prise qui s'étendent transversalement à ceux-ci en étant espacées l'une de l'autre, lesdits plans et lesdites voies de mise en prise s'articulant circonscrivant notamment une zone centrale de l'interface (3), plus particulièrement sous la forme d'un rectangle.

4. Châssis de véhicule selon l'une des revendications 1 à 3, dans lequel au moins deux éléments de boulonnage (4A, 4B) sont disposés sur une patte (6) commune, lesdits éléments de boulonnage (4A, 4B) et lesdits éléments de mise en prise (5A, 5B) des parties de châssis (1, 2) respectives étant notamment essentiellement en contact ou en prise mutuelle dans un même plan.

5. Châssis de véhicule selon l'une des revendications 1 à 4, dans lequel les éléments de mise en prise (5A, 5B) d'au moins une voie de mise en prise s'étendent dans la direction horizontale ou verticale.

6. Châssis de véhicule selon l'une des revendications 1 à 5, dans lequel les éléments de mise en prise (5A, 5B) d'au moins une voie de mise en prise présentent plusieurs extensions qui vont en rétrécissant en direction de l'autre élément de mise en prise (5A, 5B) respectif de la voie de mise en prise.

7. Châssis de véhicule selon l'une des revendications 1 à 6, dans lequel les éléments de mise en prise (5A, 5B) d'au moins une section de mise en prise présentent plusieurs extensions s'étendant dans la direction horizontale ou verticale.

8. Châssis de véhicule selon l'une des revendications 1 à 7, dans lequel au moins un élément de mise en prise (5A, 5B) d'au moins une voie de mise en prise est disposé réglable en position sur la partie de châssis (1, 2) respective, notamment au moyen d'un mécanisme de réglage et/ou réglable dans le sens de son étendue.

9. Grue mobile dotée d'un châssis de véhicule selon l'une des revendications 1 à 8.
